# EUROPEAN PATENT APPLICATION

(11) **EP 2 679 907 A2**
(43) Date of publication of application: **01.01.2014**
(21) Application number: 13174185.2
(22) Date of filing: 28.06.2013
(51) Int. Cl.: F23R 3/28, F23D 14/48, F23D 14/62, F23D 14/58

(54) **Combustion nozzle and an associated method thereof**

(30) Priority: 29.06.2012 US 201213538516
(71) Applicant: General Electric Company, Schenectady, New York 12345 (US)
(72) Inventor: Idahosa, Uyigue Omoma, Niskayuna, NY New York 12309 (US); Brand, Anthony Robert, Niskayuna, NY New York 12309 (US); Karim, Hasan, Niskayuna, NY New York 12309 (US); Hughes, Michael John, Niskayuna, NY New York 12309 (US)
(74) Representative: Illingworth-Law, William Illingworth

(57) **Abstract**

A combustion nozzle (28) includes a mixing section (30) and an exit section (32). The mixing section (30) includes an air inlet (38), and a fuel inlet (36). The exit section (32) includes a plurality of jets formed in a predefined pattern on an exit surface (42). A ratio of a core area of the plurality of jets to an exit surface area is greater than 0.25.

## Description

### BACKGROUND

The invention relates generally to combustors, and more specifically, to a combustion nozzle for injecting an air-fuel mixture into a combustion zone within a combustor.

A combustor is a component or area of an engine where combustion takes place. In a gas turbine engine, for example, a compressor feeds high pressure air to the combustor or combustion chamber. The combustor then heats the air along with a fuel at a constant pressure. After combustion, the generated exhaust gases are fed from the combustor to the turbine via the nozzle guide vanes. Such an engine employed in a gas turbine plant or a combined cycle plant, for example, is operated to achieve higher operational efficiency under higher temperature and higher pressure conditions, and tends to increase emissions (for example, CO, NOx) in an exhaust gas stream. Although various factors for generation of emissions are known, the dominant one is flame temperature in a combustor.

CO emissions in gas turbines are an important parameter for machines which are required to operate away from baseload (maximum capacity) conditions. Increased CO emission is associated with the typically lower pressures/temperatures associated with part load operation of the machine. Such conditions are characterized by inadequate consumption of CO produced in the flame front.

### BRIEF DESCRIPTION

In accordance with one exemplary embodiment of the present invention, a combustion nozzle is disclosed. The combustion nozzle includes a mixing section and an exit section. The mixing section includes an air inlet, and a fuel inlet. The exit section includes a plurality of jets formed in a predefined pattern on an exit surface. A ratio of a core area of the plurality of jets to an exit surface area is greater than 0.25.

In accordance with another exemplary embodiment of the present invention, a gas turbine is disclosed. The gas turbine includes an air compressor, a combustor coupled to the compressor, and a turbine coupled to the combustor. The combustor includes a casing, and an exemplary combustion nozzle disposed upstream of a combustion zone within the casing.

In accordance with another exemplary embodiment of the present invention, a method includes mixing air and a fuel within a mixing section of an exemplary combustion nozzle to generate an air-fuel mixture. The method further includes injecting the air-fuel mixture via an exit section of the exemplary combustion nozzle to a combustion zone disposed downstream of the exemplary combustion nozzle.

In accordance with another exemplary embodiment of the present invention, a method for forming an exemplary combustion nozzle is disclosed.

### DRAWINGS

These and other features, aspects, and advantages of the present invention will become better understood when the following detailed description is read with reference to the accompanying drawings in which like characters represent like parts throughout the drawings, wherein:
FIG. 1 is a diagrammatical representation of a gas turbine engine having an exemplary combustor in accordance with an exemplary embodiment of the present invention;
FIG. 2 is a diagrammatical representation of a combustor having an exemplary combustion nozzle in accordance with an exemplary embodiment of the present invention;
FIG. 3 is a diagrammatical representation of an exit section of a combustion nozzle in accordance with an exemplary embodiment of the present invention;
FIG. 4 is a perspective view of an exit section of a combustion nozzle in accordance with an exemplary embodiment of the present invention;
FIG. 5 is a diagrammatical representation of a plurality of nozzle jets arranged in a hexagonal pattern in accordance with an exemplary embodiment of the present invention;
FIG. 6 is a diagrammatical representation of a plurality of nozzle jets arranged in a square pattern in accordance with an exemplary embodiment of the present invention;
FIG. 7 is a diagrammatical representation of a plurality of nozzle jets arranged in a morphed hexagonal pattern in accordance with an exemplary embodiment of the present invention; and
FIG. 8 is a diagrammatical representation of a plurality of nozzle jets arranged in a radial/circular pattern in accordance with an exemplary embodiment of the present invention.

### DETAILED DESCRIPTION

In accordance with the embodiments of the present invention, a combustion nozzle is disclosed. The exemplary combustion nozzle includes a mixing section having an air inlet, and a fuel inlet. The nozzle further includes an exit section having a plurality of jets formed in a predefined pattern on an exit surface. A ratio of a core area of the plurality of jets to a nozzle exit total surface area is greater than 0.25. In accordance with a specific embodiment of the prevent invention, a gas turbine having the exemplary combustion nozzle is disclosed. In accordance with certain other embodiments, a method associated with the combustion nozzle is disclosed. At part-load conditions, the intra-jet recirculation zones generated by the exemplary combustion nozzles are sufficiently large to consume the carbon monoxide (CO) produced at the flame front of the combustor.

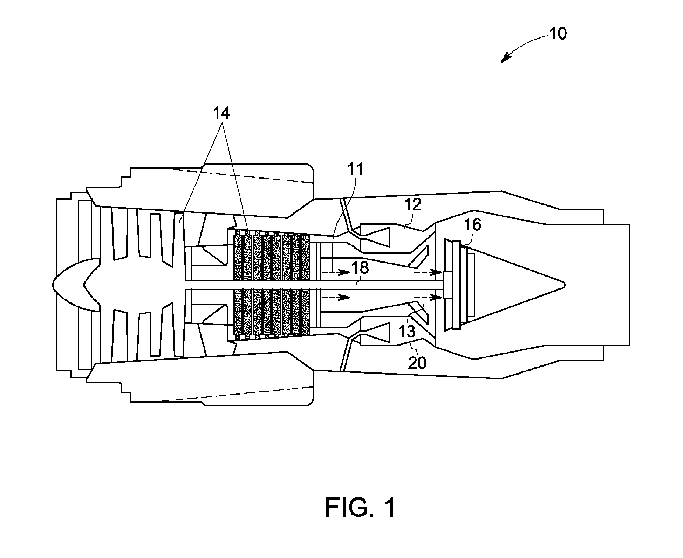

Turning now to drawings and referring first to FIG. 1, a gas turbine 10 having a low emission combustor 12 is illustrated. The gas turbine 10 includes a compressor 14 configured to compress ambient air. The combustor 12 is in flow communication with the compressor 14 and is configured to receive compressed air 11 from the compressor 14 and to combust a fuel stream to generate a combustor exit gas stream 13. In the illustrated embodiment, the combustor 12 includes a combustor housing 20 defining a combustion area. In one embodiment, the combustor 12 includes a can combustor. In an alternate embodiment, the combustor 12 includes a can-annular combustor or a purely annular combustor. In addition, the gas turbine 10 includes a turbine 16 located downstream of the combustor 12. The turbine 16 is configured to expand the combustor exit gas stream 13 to drive an external load. In the illustrated embodiment, the compressor 14 is driven by the power generated by the turbine 16 via a shaft 18.

The combustor 12 includes a combustion nozzle for receiving compressed air 11 and the fuel stream, mix the air 11 and the fuel stream to generate an air-fuel mixture, and inject the air-fuel mixture to a combustion zone. The combustion nozzle is explained in greater detail with reference to subsequent figures.

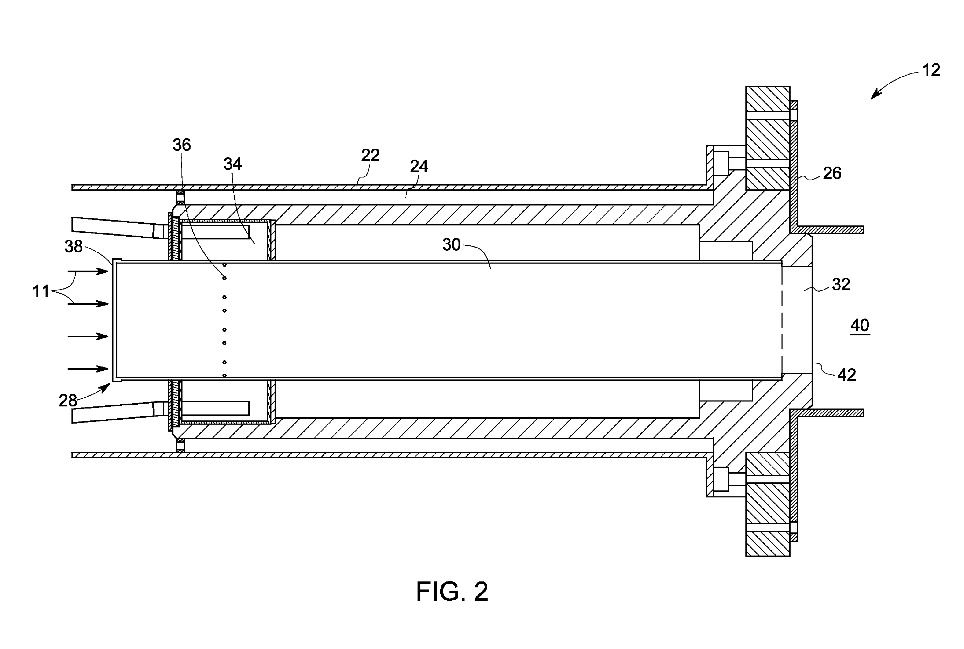

Referring to FIG. 2, the combustor 12 in accordance with the aspects of FIG. 1 is illustrated. The exemplary combustor 12 includes a combustor housing 22 defining a combustion chamber 24. A cover assembly (not shown) may be provided on one end of the combustor housing 22. A combustion liner 26 is disposed within the combustor housing 22. The combustion liner 26 may be provided with a plurality of dilution holes.

A combustion nozzle 28 is disposed within the combustion chamber 24. The exemplary combustion nozzle 28 includes a mixing section 30 and an exit section 32. The combustor 12 further includes a fuel plenum 34 for supplying a fuel to the combustion chamber 24. The fuel enters the combustion nozzle 28 via one or more fuel inlet holes 36 provided in the mixing section 30. The mixing section 30 also has an air inlet 38 for receiving the air stream 11 from the compressor.

In certain embodiments, the fuel may include hydrocarbons, natural gas, or high hydrogen gas, or hydrogen, or biogas, or carbon monoxide, or syngas, or inert gas, or water vapor, or oxidizers along with predetermined amount of diluents. Diluents may include nitrogen, carbon dioxide, water, steam, or the like.

The mixing section 30 of the combustion nozzle 28 is configured to mix air 11 and the fuel and generate an air-fuel mixture. The exit section 32 is configured to receive the air-fuel mixture and inject the air-fuel mixture to a combustion zone 40 of the combustion chamber 24. The exit section 32 is configured to generate turbulent flow of the air-fuel mixture in the combustion zone 40 of the combustor 12. The exit section 32 includes a plurality of jets formed in a predefined pattern on an exit surface 42. The exit surface 42 with the plurality of jets is explained in greater detail with reference to subsequent figures.

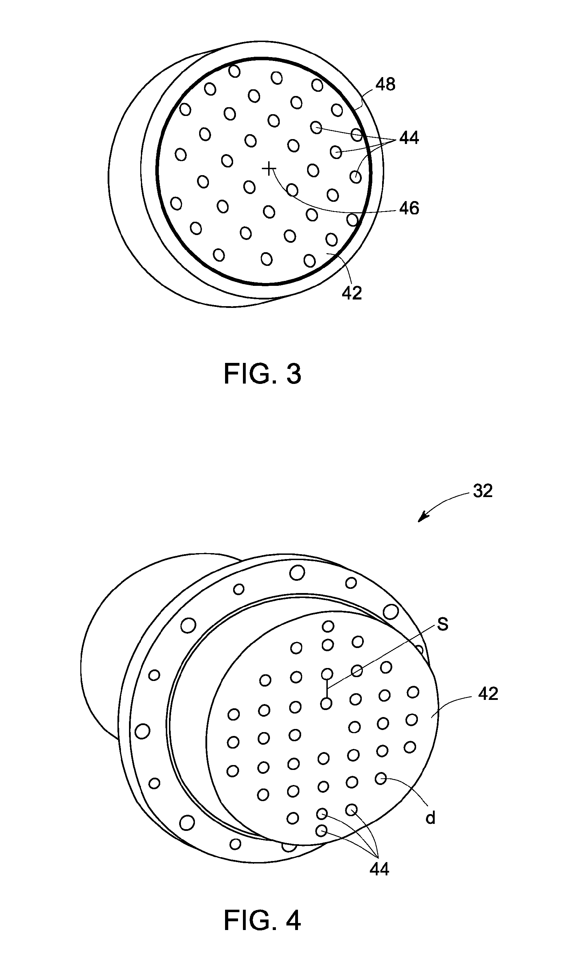

Referring to FIG. 3, the exit surface 42 having a plurality of jets 44 is illustrated. In accordance with the embodiments of the present invention, the plurality of jets 44 are spaced so to occupy a large area of the exit surface 42. In the illustrated embodiment, a core area of the plurality of jets 44 is defined as an area bounded by the farthest jets among the plurality of jets 44 from a surface center 46. In the illustrated embodiment, circumference of the core area of the plurality of jets 44 is represented by a circle 48. The plurality of jets 44 may be arranged in different patterns as explained with reference to subsequent figures.

In accordance with the embodiments of the present invention, a ratio of a core area of the plurality of jets to an exit surface area is greater than 0.25. In one embodiment of the exit section having a desired jet distribution, the ratio of the core area of the plurality of jets 44 to the exit surface area is in the range of 0.25 to 0.4. In another embodiment of the exit section having an alternate desired jet distribution, the ratio of the core area of the plurality of jets 44 to the exit surface area is in the range of 0.4 to 0.5. In yet another embodiment of the exit section having an alternate desired jet distribution, the ratio of the core area of the plurality of jets 44 to the exit surface area is greater than 0.5. It should be noted herein that although a circular nozzle is shown, it should not be construed as limiting the scope of the invention. Aspects of the present invention are also applicable to non-circular nozzles.

In some embodiments of the exit section having a desired jet distribution, a ratio of a diameter of the core area of the plurality of jets 44 to an exit surface diameter is in the range of 0.5 to 0.63. In certain other embodiments of the exit section having an alternate desired jet distribution, a ratio of a diameter of the core area of the plurality of jets to an exit surface diameter is greater than 0.63.

As discussed previously, CO emission in gas turbines is an important parameter for machines which are required to operate away from baseload (maximum capacity) conditions. Increased CO emission is associated with the typically lower pressures/temperatures associated with part load operation of the machine. At such conditions, the intra-jet recirculation zones generated by conventional combustion nozzles based on arrays of jet phase are not sufficiently large to consume the CO produced at the flame front of the combustor.

It should be noted herein that "bluff area" on the exit surface of the exit section of the nozzle leads to generation of CO. In accordance with the embodiments of the present invention, distributed jets with minimal "bluff areas" on the exit surface of the section of the nozzle enable generation of intra-jet recirculation zones sufficiently large to consume the CO produced at the flame front of the combustor. In other words, the plurality of jets 44 are spaced in such a way so as to occupy "a large area" of the exit surface 42.

Referring to FIG. 4, the exit section 32 of the nozzle in accordance with an embodiment of the present invention is illustrated. The exit section 32 includes the exit surface 42 having the plurality of jets 44. As discussed previously, the plurality of jets 44 are spaced apart so as to occupy a large area of the exit surface 42. The plurality of jets 44 are spaced in such a way that a spacing between two mutually adjacent jets among the plurality of jets 44 is representative of a distance extending from a center of one jet to another corresponding center of other jet among the mutually adjacent jets 44. In the illustrated embodiment, the spacing between two mutually adjacent jets is represented by "s", and diameter of each jet is represented by "d".

In one embodiment of the exit section 32 having a desired jet spacing, a ratio of the spacing "s" between two mutually adjacent jets among the plurality of jets to the jet diameter "d" is in a range of 1.5 to 1.9. In another embodiment of the exit section 32 having an alternate desired jet spacing, a ratio of the spacing "s" between two mutually adjacent jets among the plurality of jets 44 to the jet diameter "d" is in a range of 1.9 to 2.5. In yet another embodiment of the exit section 32 having an alternate desired jet spacing, a ratio of the spacing "s" between two mutually adjacent jets among the plurality of jets to the jet diameter "d" is greater than 2.5.

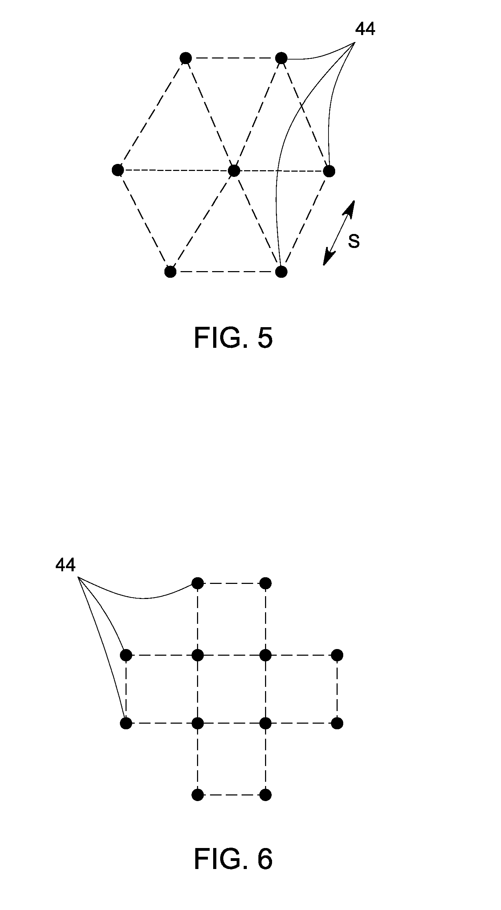

Referring to FIG. 5, the plurality of jets 44 formed in a hexagonal pattern on the exit surface of the exit section of the nozzle is illustrated. As discussed previously, the plurality of jets 44 are spaced so as to occupy a large area of the exit surface of the nozzle. As discussed previously, the plurality of jets 44 are spaced in such a way that a spacing between two mutually adjacent jets among the plurality of jets 44 is representative of a distance extending from a center of one jet to another corresponding center of other jet among the mutually adjacent jets 44. Each dotted line is representative of the spacing between two mutually adjacent jets. Any set of three mutually adjacent jets 44 form a three-sided polygon. The plurality of three-sided polygon forms the hexagonal pattern of arrangement of jets.

Referring to FIG. 6, the plurality of jets 44 formed in a square pattern on the exit surface of the exit section of the nozzle is illustrated. The plurality of jets 44 are spaced in such a way that a spacing between two mutually adjacent jets among the plurality of jets 44 is representative of a distance extending from a center of one jet to another corresponding center of other jet among the mutually adjacent jets 44. Each dotted line is representative of the spacing between two mutually adjacent jets. Any set of four mutually adjacent jets 44 form a quadrilateral. The plurality of quadrilateral forms the square pattern of arrangement of jets.

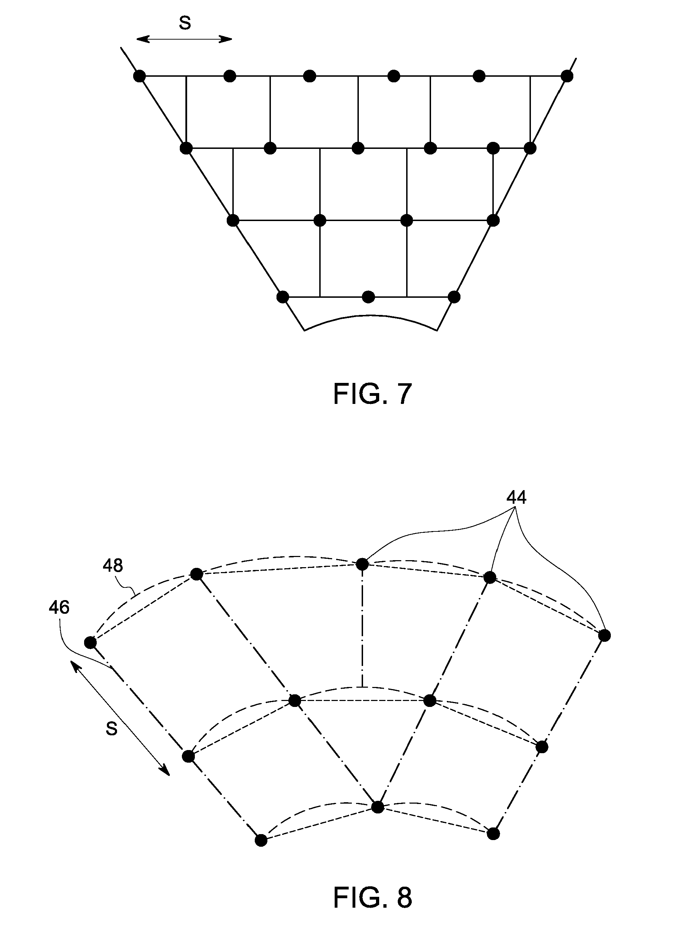

Referring to FIG. 7, the plurality of jets 44 formed in a morphed hexagonal (sector) pattern on the exit surface of the exit section of the nozzle is illustrated. The plurality of jets 44 are spaced in such a way that a spacing between two mutually adjacent jets among the plurality of jets 44 is representative of a distance extending from a center of one jet to another corresponding center of other jet among the mutually adjacent jets 44. Each dotted line is representative of the spacing between two mutually adjacent jets. In the illustrated embodiment, the jets in each row are arranged along a straight line (i.e. oriented 180 degrees). In some embodiments, the jets may not be arranged along a straight line. In such embodiments, a spacing between two mutually adjacent jets among the plurality of jets 44 may be an "arc length" extending from a center of one jet to center of the mutually adj acent jet.

Referring to FIG. 8, the plurality of jets 44 formed in a circular/pattern on the exit surface of the exit section of the nozzle is illustrated. The plurality of jets 44 are spaced in such a way that a spacing between two mutually adjacent jets among the plurality of jets 44 is representative of a distance extending from a center of one jet to another corresponding center of other jet among the mutually adjacent jets 44. In one embodiment, the spacing between mutually jets 44 is a distance along a straight line as represented by the reference numeral 46. In another embodiment, the spacing between mutually jets 44 is an arc length as represented by the reference numeral 48. In other embodiments, other suitable patterns of jet arrangement are also envisioned. For example, the jets 44 may be arranged in oval pattern, elliptical pattern, or the like. It should be noted herein all permutations and combinations of features discussed with reference to FIGS. 3-8, are also envisioned.

In accordance with the embodiments discussed above, achieving low CO emissions from a gas turbine is driven by optimal spacing between the jets of the nozzle. The optimal spacing between the jets increase the size of the recirculation zones between the jets to consume the CO produced in the flame front. Embodiments of the present invention disclose distributed jets with minimal bluff areas on the exit surface of the nozzle. The lower CO emissions enable part-load operation of the gas turbine.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A combustion nozzle, comprising:
   a mixing section comprising an air inlet, and a fuel inlet; and
   an exit section comprising a plurality of jets formed in a predefined pattern on an exit surface; wherein a ratio of a core area of the plurality of jets to an exit surface area is greater than 0.25.
2. The combustion nozzle of clause 1, wherein the pattern comprises a hexagonal pattern.
3. The combustion nozzle of clause 1 or clause 2, wherein the pattern comprises a morphed hexagonal pattern.
4. The combustion nozzle of any preceding clause, wherein the pattern comprises a square pattern.
5. The combustion nozzle of any preceding clause, wherein the pattern comprises a circular pattern.
6. The combustion nozzle of any preceding clause, wherein the ratio of the core area of the plurality of jets to the exit surface area is in the range of 0.25 to 0.4.
7. The combustion nozzle of any preceding clause, wherein the ratio of the core area of the plurality of jets to the exit surface area is in the range of 0.4 to 0.5.
8. The combustion nozzle of any preceding clause, wherein the ratio of the core area of the plurality of jets to the exit surface area is greater than 0.5.
9. The combustion nozzle of any preceding clause, wherein a ratio of a core diameter of the plurality of jets to an exit surface diameter is in the range of 0.5 to 0.63.
10. The combustion nozzle of any preceding clause, wherein a ratio of a core diameter of the plurality of jets to an exit surface diameter is greater than to 0.63.
11. The combustion nozzle of any preceding clause, wherein a ratio of a spacing between two mutually adjacent jets among the plurality of jets to jet diameter is in a range of 1.5 to 1.9.
12. The combustion nozzle of any preceding clause, wherein a ratio of a spacing between two mutually adjacent jets among the plurality of jets to jet diameter is in a range of 1.9 to 2.5.
13. The combustion nozzle of any preceding clause, wherein a ratio of a spacing between two mutually adjacent jets among the plurality of jets to jet diameter is greater than 2.5.
14. The combustion nozzle of any preceding clause, wherein a spacing between two mutually adjacent jets among the plurality of jets is representative of a distance extending from a center of one jet to another corresponding center of other jet among the mutually adjacent jets.
15. The combustion nozzle of any preceding clause, wherein the spacing extends along a straight line pattern.
16. The combustion nozzle of any preceding clause, wherein the spacing extends along an arc pattern.
17. A gas turbine, comprising:
   an air compressor;
   a combustor coupled to the compressor, the combustor comprising
   a casing; and
   a combustion nozzle disposed upstream of a combustion zone within the casing;
   wherein the combustion nozzle comprises:
   a mixing section comprising an air inlet, and a fuel inlet; and
   an exit section comprising a plurality of jets formed in a predefined pattern on an exit surface; wherein a ratio of a core area of the plurality of jets to an exit surface area is greater than 0.25; and
   a turbine coupled to the combustor.
18. The gas turbine of any preceding clause, wherein the pattern comprises a hexagonal pattern.
19. The gas turbine of any preceding clause, wherein the pattern comprises a morphed hexagonal pattern.
20. The gas turbine of any preceding clause, wherein the pattern comprises a square pattern.
21. The gas turbine of any preceding clause, wherein the pattern comprises a circular pattern.
22. The gas turbine of any preceding clause, wherein a ratio of a spacing between two mutually adjacent jets among the plurality of jets to jet diameter is greater than 1.5.
23. The gas turbine of any preceding clause, wherein the spacing is representative of a distance extending from a center of one jet to another corresponding center of other jet among the mutually adjacent jets.
24. A method, comprising:
   mixing air and a fuel within a mixing section of a combustion nozzle to generate an air-fuel mixture; and
   injecting the air-fuel mixture via an exit section of the combustion nozzle to a combustion zone disposed downstream of the combustion nozzle; wherein the exit section comprises a plurality of jets formed in a predefined pattern on an exit surface; wherein a ratio of a core area of the plurality of jets to an exit surface area is greater than 0.25.
25. A method comprising:
   forming a combustion nozzle, comprising:
      forming a mixing section comprising an air inlet, and a fuel inlet; and
      forming an exit section comprising a plurality of jets formed in a predefined pattern on an exit surface; wherein a ratio of a core area of the plurality of jets to an exit surface area is greater than 0.25.

## Claims

1. A combustion nozzle (28), comprising:
a mixing section (30) comprising an air inlet (38), and a fuel inlet (36); and
an exit section (32) comprising a plurality of jets (44) formed in a predefined pattern on an exit surface (42); wherein a ratio of a core area of the plurality of jets (44) to an exit surface area is greater than 0.25.

2. The combustion nozzle (28) of claim 1, wherein the pattern comprises a hexagonal pattern.

3. The combustion nozzle (28) of claim 1 or claim 2, wherein the pattern comprises a morphed hexagonal pattern.

4. The combustion nozzle (28) of any preceding claim, wherein the pattern comprises a square pattern.

5. The combustion nozzle (28) of any preceding claim, wherein the pattern comprises a circular pattern.

6. The combustion nozzle (28) of any preceding claim, wherein the ratio of the core area of the plurality of jets (44) to the exit surface area is in the range of 0.25 to 0.4.

7. The combustion nozzle (28) of any preceding claim, wherein the ratio of the core area of the plurality of jets (44) to the exit surface area is in the range of 0.4 to 0.5.

8. The combustion nozzle (28) of any preceding claim, wherein the ratio of the core area of the plurality of jets (44) to the exit surface area is greater than 0.5.

9. The combustion nozzle (28) of any preceding claim, wherein a ratio of a core diameter of the plurality of jets (44) to an exit surface diameter is in the range of 0.5 to 0.63.

10. The combustion nozzle (28) of any preceding claim, wherein a ratio of a core diameter of the plurality of jets (44) to an exit surface diameter is greater than to 0.63.

11. The combustion nozzle (28) of any preceding claim, wherein a ratio of a spacing between two mutually adjacent jets (44) among the plurality of jets (44) to jet diameter is in a range of 1.5 to 1.9.

12. The combustion nozzle (28) of any preceding claim, wherein a ratio of a spacing between two mutually adjacent jets (44) among the plurality of jets (44) to jet diameter is in a range of 1.9 to 2.5.

13. The combustion nozzle (28) of any preceding claim, wherein a ratio of a spacing between two mutually adjacent jets (44) among the plurality of jets (44) to jet diameter is greater than 2.5.

14. A gas turbine (10), comprising:
an air compressor (14);
a combustor (20) coupled to the compressor (14), the combustor (20) comprising
a casing (22); and
a combustion nozzle (28) according to any of the preceding claims, disposed upstream of a combustion zone (40) within the casing (22); and
a turbine (16) coupled to the combustor (20).

15. A method, comprising:
mixing air and a fuel within a mixing section (30) of a combustion nozzle (28) to generate an air-fuel mixture; and
injecting the air-fuel mixture via an exit section (32) of the combustion nozzle (28) to a combustion zone (40) disposed downstream of the combustion nozzle (28); wherein the exit section (32) comprises a plurality of jets (44) formed in a predefined pattern on an exit surface (42); wherein a ratio of a core area of the plurality of jets (44) to an exit surface area is greater than 0.25.
